# EUROPÄISCHE PATENTSCHRIFT

(11) **EP 3 478 483 B1**
(45) Veröffentlichungstag und Bekanntmachung des Hinweises auf die Patenterteilung: **19.08.2020**
(21) Anmeldenummer: 17730830.1
(22) Anmeldetag: 22.06.2017
(51) Int. Cl.: B29C 70/46, B29C 45/14, B29C 70/68, B29C 45/56, B27N 3/00, B29C 70/74, B29K 67/00, B29K 105/00, B29K 33/00, B29K 59/00, B29K 63/00, B29K 75/00, B29K 77/00, B29C 69/02, B29K 105/06, B29K 25/00, B29K 105/08

(54) **VERFAHREN ZUR HERSTELLUNG EINES FUNKTIONALISIERTEN, DREIDIMENSIONALEN FORMKÖRPERS**
METHOD FOR THE PREPARATION OF A FUNCTIONALISED, THREE-DIMENSIONAL MOULDED BODY
PROCEDE DE FABRICATION D'UN CORPS DE FORMAGE TRIDIMENSIONNEL FONCTIONNALISE

(30) Priorität: 30.06.2016 EP 16177087
(43) Veröffentlichungstag der Anmeldung: 08.05.2019
(73) Patentinhaber: BASF SE, 67056 Ludwigshafen (DE)
(72) Erfinder: KALBE, Michael, 67056 Ludwigshafen (DE); DALLNER, Claus, Hong Kong (CN); SCHEIDHAUER, Rainer, 67056 Ludwigshafen (DE); HORISBERGER, Alex, 67056 Ludwigshafen (DE)
(86) Internationale Anmeldenummer: PCT/EP2017/065434
(87) Internationale Veröffentlichungsnummer: WO 2018/001866

(56) Entgegenhaltungen:
- EP-A1- 2 596 943
- DE-A1-102010 063 751
- DE-A1-102011 005 350
- DE-A1-102013 205 381
- Anonymous: "Eco-technology by BASF", , 5. Juni 2016 (2016-06-05), Seiten 1-8, XP055342971, Gefunden im Internet: URL:http://product-finder.basf.com/group/c orporate/product-finder/en/literature-docu ment:/Sales+Products+Acrodur+950+L-Brochur e--Acrodur+Ecotechnology+by+BASF-English.p df [gefunden am 2017-02-07]
- Anonymous: "IAC debuts FiberFrame on 2017 Mercedes-Benz : CompositesWorld", , 13. April 2016 (2016-04-13), Seiten 1-2, XP055342982, Gefunden im Internet: URL:http://web.archive.org/web/20160413045 450/http://www.compositesworld.com/news/ia c-debuts-fiberframe-on-2017-mercedes-benz [gefunden am 2017-02-07]
- Anonymous: "Safety Data Sheet Acrodur 950 L", , 24. Juni 2016 (2016-06-24), Seiten 1-9, XP055342966, Gefunden im Internet: URL:http://worldaccount.basf.com/wa/NAFTA/ Catalog/FunctionalPolymers/doc4/BASF/PRD/3 0050170/.pdf?urn=urn:documentum:ProductBas e_EU:09007af8800bc46c.pdf [gefunden am 2017-02-07]
- Acrodur Anonymous: "Safety Data Sheet Acrodur DS 3515", , 11. Februar 2016 (2016-02-11), Seiten 1-8, XP055342986, internet Gefunden im Internet: URL:http://worldaccount.basf.com/wa/NAFTA/ Catalog/FunctionalPolymers/doc4/BASF/PRD/3 0191417/.pdf?urn=urn:documentum:ProductBas e_EU:09007af8801cca95.pdf [gefunden am 2017-02-07]

## Beschreibung

Die vorliegende Erfindung betrifft ein Verfahren zur Herstellung eines funktionalisierten, dreidimensionalen Formkörpers in einem Werkzeug aus einem Komposit enthaltend mindestens ein Fasermaterial, mindestens eine Verbindung V1 und mindestens eine Verbindung V2, wobei die Verbindungen V1 und V2 im Werkzeug durch Reaktion miteinander vernetzen und dabei duroplastisch aushärten.

Naturfaser-Formkörper werden in der Automobilindustrie zum Beispiel in der Türkonstruktion als Trägermaterial für die Dekorware eingesetzt. Bekannte Verfahren zu deren Herstellung sind das Heißpressen kalter Materialien (zum Beispiel Faserkomposite) wie auch das Kaltpressen vorgeheizter Materialien.

DE-A 199 48 664 offenbart ein Verfahren, bei dem eine Fasermatte in einem Spritzgießwerkzeug mit Kunststoff umspritzt wird, wobei die Fasermatte mit einer ihrer Oberflächen an einer ersten Formhälfte des Spritzgießwerkzeuges anliegend in diesem fixiert wird und anschließend daran ein Kunststoffmaterial in den Raum zwischen der Fasermatte und der zweiten Formhälfte des Spritzgießwerkzeuges eingebracht wird. Im Verfahren gemäß DE-A 199 48 664 wird jedoch kein Komposit-Material zur Verformung eingesetzt, sondern nur eine Fasermatte als solche. Zum Umspritzen der Fasermatte kann jeder beliebige Kunststoff eingesetzt werden und es ist auch nicht ersichtlich, bei welchen Temperaturen die einzelnen Verfahrensschritte durchgeführt werden.

WO 2013/030103 offenbart ein Verfahren zur Herstellung von Formteilen aus einem faserverstärkten Polymer, folgende Schritte umfassend: (a) Einlegen einer Faserstruktur in ein Formwerkzeug und Umspritzen der Faserstruktur mit einer Polymervorläuferverbindung oder Tränken einer Faserstruktur mit einer Polymervorläuferverbindung und Einlegen der getränkten Faserstruktur in ein Formwerkzeug, wobei die Polymervorläuferverbindung eine Viskosität von maximal 2000 mPas aufweist, (b) Polymerisation der Polymervorläuferverbindung zum Polymeren zur Herstellung des Formteils, (c) Entnehmen des Formteils aus dem Formwerkzeug, sobald die Polymerisation zumindest so weit fortgeschritten ist, dass das Formteil im Wesentlichen formstabil ist. Im Verfahren gemäß WO 2013/030103 werden Polymer-Vorläuferverbindungen verwendet, aus denen Formwerkzeuge durch Polymerisation ein thermoplastisches oder ein duroplastisches Polymer entsteht. Es wird jedoch nirgendwo offenbart, dass das dort verwendete Fasermaterial bereits mit duroplastisch aushärtbaren Verbindungen versehen sein muss, bevor es in ein erwärmtes Formwerkzeug eingelegt wird, worauf anschließend ein zusätzlicher Funktionalisierungsschritt des im Formwerkzeug hergestellten dreidimensionalen Formkörpers mit einem Spritzgusspolymer durchgeführt wird.

WO 2012/116947 offenbart Verfahren zur Herstellung von faserverstärkten, flachen Halbzeugen auf Polyamidmatrix, das die folgende Schritte umfasst: (a) Tränken von textilen Strukturen mit einer Mischung enthaltend geschmolzenes Lactam, Katalysator und gegebenenfalls Aktivator, (b) Abkühlen der getränkten textilen Strukturen, (c) Konfektionieren der abgekühlten textilen Strukturen zu dem faserverstärkten, flachen Halbzeug. WO 2012/116947 betrifft weiterhin auch ein Verfahren zur Herstellung eines Bauteils aus dem faserverstärkten, flachen Halbzeug durch Verpressen des Halbzeuges und Heizen des Werkzeuges, wobei das Lactam zu Polyamid polymerisiert. Im Verfahren gemäß WO 2012/116947 werden jedoch keine Verbindungen eingesetzt, die duroplastisch aushärten können. Weiterhin ist dort nicht offenbart, dass die aus faserverstärkten flachen Halbzeugen hergestellten Bauteilen mit Spritzgusspolymeren funktionalisiert werden können.

EP-A 2 596 943 offenbart ein Verfahren zur Herstellung von Faserverbund-Formteilen umfassend (i) eine thermovernetzbare Faserverbundschicht als Trägerschicht, und (ii) eine thermoplastische Faserverbundschicht als Deckschicht, bei dem die Faserverbundschicht (i) umfassend einen thermovernetzbaren Binder im nicht ausgehärteten Zustand und die thermoplastische Deckschicht (ii) aufeinander gelegt und in einer Formpresse in die gewünschte Form gebracht und thermovernetzt werden, wobei die erste Kontaktfläche der Formpresse, die mit der Trägerschicht Kontakt hat, eine höhere Temperatur als die zweite Kontaktfläche der Formpresse, die mit der Deckschicht in Kontakt steht, aufweist. In EP-A 2 596 943 ist jedoch nirgendwo offenbart, dass die so hergestellten Faser- und Formteile einer Funktionalisierung mit einem Spritzgusspolymer unterzogen werden können. Ebenso wenig ist darin beschrieben, dass die thermovernetzbare Faserverbundschicht in ein bereits erwärmtes Werkzeug eingelegt werden muss.

DE-A 10 2011 005 350 offenbart eine Vorrichtung und ein Verfahren zur Herstellung eines Formteils mit faserverstärkten Träger aus thermoplastischen oder duroplastischen Material und mindestens einem damit verbundenen, Kunststoff aufweisenden Anbauteil. In dem Verfahren gemäß DE-A 10 2011 005 350, die den Oberbegriff des Anspruchs 1 offenbart, kann in dem faserverstärkten Träger prinzipiell also ein bereits fertig ausgehärteter Duroplast oder ein thermoplastisches Material gesetzt werden, bevor eine Verformung des faserverstärkten Trägers durch Verpressen erfolgt. Das eingesetzte Trägermaterial wird in der Regel außerhalb des Werkzeuges vorgeheizt, bevor es in das Werkzeug eingelegt wird. In der DE-A 10 2011 005 350 ist jedoch nicht offenbart, dass das Trägermaterial in ein bereits erwärmtes Werkzeug eingelegt werden muss.

T. Pfefferkorn et al. ("Vom Laminat zum Bauteil" Kunststoffe 12/2013; Karl Hanser Verlag, Münch*en),* beschreiben ein Verfahren zur Herstellung von endlosverstärkten Thermoplasten. In dem Verfahren werden zunächst mit Polymeren oder mit Polymer-Vorläuferverbindungen imprägnierte Komposit-Testkörper/Laminate außerhalb eines Umformwerkzeuges erhitzt, worauf anschließend innerhalb dieses Umformwerkzeuges (Spritzgusswerkzeug) die Umformung des Laminats zum Formkörper sowie die Umspritzung des erhaltenen Formkörpers mit einem Thermoplasten durchgeführt wird.

Bei einem weiteren Verfahren zur Herstellung von funktionalisierten, dreidimensionalen Formkörpern werden Rippen und Anbindungspunkte unmittelbar auf den gepressten, noch heißen Träger angespritzt. Ausgangsmaterial für diesen sind Hybridvliese, die aus Thermoplast- und Verstärkungsfasern hergestellt werden (siehe http://media.daimler.com/dcmedia/0-921-614316-49-1614580-1-0-1-0-0-0-13471-0-0-1-0-0-0-0-0.html, Datum des Abrufs der Seite: 17. September 2014). Dem Artikel kann jedoch nicht entnommen werden, dass in den eingesetzten Ausgangmaterialien auch duroplastisch aushärtbare Verbindungen vorhanden sind. Ebenso wenig wird dort offenbart, dass die eingesetzten Ausgangsmaterialien in ein bereits erwärmtes Formwerkzeug eingesetzt werden müssen.

DE 10 2010 063 751 A1 offenbart ein Verfahren zur Herstellung eines Leichtbauteils, wobei das Leichtbauteil eine Sichtseite und eine Befestigungsseite aufweist, und wobei nach dem Einlegen eines Naturfaserhalbzeugs in ein Spritzgießwerkzeug, dieses Naturfaserhalbzeug verpresst und/oder umgeformt sowie konsolidiert wird.

J. Sloan ("IAC debuts FiberFrame on 2017 Mercedes Benz: compositesworld"; 13. April 2016) offenbart die Verwendung von Acrodur® 950L als Bindemittel für Fasersysteme zur Herstellung von Innenausstattungselementen von Automobilen.

In der Broschüre *Eco technology* der BASF SE werden die verschiedenen Härtungseigenschaften der Acrodur®-Reagenzien angeführt.

Die der vorliegenden Erfindung zugrunde liegende Aufgabe besteht in der Bereitstellung eines neuen Verfahrens zur Herstellung von funktionalisierten, dreidimensionalen Formkörpern bzw. den Formkörpern als solchen.

Gelöst wird die Aufgabe durch ein Verfahren zur Herstellung eines funktionalisierten, dreidimensionalen Formkörpers aus einem Komposit in einem Werkzeug, wobei das Verfahren die folgenden Schritte a) bis d) umfasst:
a) Einlegen des Komposits in das Werkzeug, wobei das Komposit mindestens ein Fasermaterial, mindestens eine Verbindung V1 und mindestens eine Verbindung V2 enthält und die Temperatur des Komposits beim Einlegen im Bereich zwischen 15 und 40 °C liegt,
b) Verformen des Komposits zu einem dreidimensionalen Formkörper im Werkzeug,
c) Funktionalisieren des Komposits oder des dreidimensionalen Formkörpers durch Anspritzen mit mindestens einem Spritzgusspolymer im Werkzeug und
d) Entnehmen des funktionalisierten, dreidimensionalen Formkörpers aus dem Werkzeug,
wobei die Verbindungen V1 und V2 im Werkzeug durch Vernetzung duroplastisch aushärten und die Temperatur des Werkzeugs mindestens in den Verfahrensschritten a) und b) unabhängig voneinander im Bereich zwischen 80 °C und 180 °C liegt, wobei
i) Verfahrensschritt c) während der Durchführung von Verfahrensschritt b) gestartet wird, oder
ii) Verfahrensschritt c) erst nach Beendigung des Verfahrensschritts b) gestartet wird.

Ein wesentlicher Vorteil des erfindungsgemäßen Verfahrens ist darin begründet, dass das eingesetzte Komposit vor der Verformung nicht mehr, wie im Stand der Technik üblich, außerhalb des entsprechenden Werkzeuges aufgeheizt werden muss. Stattdessen wird das fertige Komposit direkt in ein bereits vorgewärmtes Werkzeug eingesetzt. Da das als Ausgangsmaterial eingesetzte Komposit neben Fasermaterial auch duroplastisch aushärtbare Verbindungen enthält, können auf einfache Weise dreidimensionale Formkörper mit hoher thermischer Stabilität hergestellt werden.

Ohne das Verfahren unterbrechen zu müssen, kann direkt im Anschluss an den Verformungsschritt des dreidimensionalen Formkörpers die Funktionalisierung dieses Formkörpers durch Anspritzen mit mindestens einem Spritzgusspolymer im Werkzeug durchgeführt werden. Alternativ kann die Funktionalisierung auch gleichzeitig mit dem Verformungsschritt gestartet werden oder während dessen Durchführung. Diese Flexibilität hinsichtlich der Reihenfolge der Durchführung der Verfahrensschritte b) und c) sowie die gegebenenfalls damit verbundene Zeitersparnis sind weitere Vorteile des erfindungsgemäßen Verfahrens. Letztendlich wird durch Steigerung der thermomechanischen Eigenschaften des Komposits die thermische Stabilität des funktionalisierten, dreidimensionalen Formkörpers durch das erfindungsgemäße Verfahren erhöht.

Gleichzeitig können hierdurch auch höhere mechanische Kennwerte erreicht werden, die leichtere funktionalisierte, dreidimensionale Formkörper ermöglicht, oder aber bei gleichbleibendem Gewicht stabilere funktionalisierte, dreidimensionale Formkörper ermöglicht.

Ein weiterer Vorteil dieses Verfahrens ist eine Kostenreduktion in der Herstellung, da mehrere Prozesse und/oder Verfahrensschritte in einem Werkzeug zusammengefasst werden.

Auch entsteht hierdurch eine Zeit- (und damit Geld-) Ersparnis, da das jeweilige Zwischenprodukt in den einzelnen Verfahrensschritten nicht umgelagert werden muss.

Ein weiterer Vorteil beim Einsatz duroplastisch aushärtbarer Verbindungen ergibt sich aus den verbesserten thermomechanischen Eigenschaften: funktionalisierte, dreidimensionale Formkörper, die nach diesem Verfahren hergestellt werden, eignen sich zur Verwendung im Kraftfahrzeugbau und/oder in der Möbelindustrie, insbesondere im Sonneneinstrahlbereich von Kraftfahrzeugen, wie zum Beispiel Türträgermodulen, Hutablagen, Armaturentafeln oder Armauflagen am Fenster.

Thermoplaste sind im Gegensatz dazu für die vorstehend beschriebenen Anwendungsgebiete kaum geeignet und können nur bei relativ niedrigen Temperaturen eingesetzt werden. Insbesondere Materialien, die größerer Wärme wie beispielsweise durch Sonnenstrahlung ausgesetzt sind, benötigen hohe Schmelzpunkte, damit sie sich nicht graduierlich verformen.

Auch die Verarbeitung von thermoplastisch aushärtbaren Materialien in Formgebungsverfahren unterscheidet sich deutlich von der Verarbeitung von Duroplasten. Im Allgemeinen werden Komposite auf Basis von Thermoplasten vor dem Verformungsschritt zunächst bis zur Schmelze vorgeheizt und im ungeheizten Werkzeug weiterverarbeitet, wo die Schmelze abkühlt und erstarrt. Da die Verformbarkeit von Thermoplasten anders als bei Duroplasten in Abhängigkeit der Temperatur reversibel sein kann, ist es für Verfahren zur Herstellung thermoplastisch aushärtbarer Materialien wichtig, dass sich das entsprechende Werkzeug während der Entformung, also dem Herauslösen des Formkörpers aus dem Werkzeug, unterhalb der Schmelzpunkttemperatur des Thermoplasten befindet. Eine höhere Temperatur würde während der Entformung dazu führen, dass sich der thermoplastische Formkörper verzieht und nicht mehr formecht aus dem Werkzeug entfernt werden kann.

Im Rahmen der vorliegenden Offenbarung wird unter den Begriffen "Duroplast" oder "duroplastisches Aushärten" Folgendes verstanden. Duroplaste, auch Duromere genannt, sind erhältlich durch (duroplastisches) Aushärten der entsprechenden Ausgangsmaterialien. In der Regel enthalten die für die Herstellung eines Duroplasten durch duroplastisches Aushärten verwendeten Ausgangsmaterialien mindestens zwei unterschiedliche Komponenten. Die erste Komponente ist häufig ein Polymer oder gegebenenfalls die entsprechenden Monomere, aus denen das jeweilige Polymer gebildet werden kann. Die zweite Komponente wird auch als Vernetzer bezeichnet, sie reagiert chemisch mit der ersten Komponente, wodurch sie ein Vernetzen der ersten Komponente, vorzugsweise von Polymerketten, bewirkt. Die Vernetzung erfolgt vorzugsweise dreidimensional. Die Duroplaste bilden somit nach dem Aushärtungsvorgang eine stabile Struktur aus, die nicht oder nur sehr schwer verformt werden kann.

Im Rahmen der vorliegenden Offenbarung wird unter dem Begriff "Thermoplast" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden

Nachfolgend wird das erfindungsgemäße Verfahren zur Herstellung von funktionalisierten, dreidimensionalen Formkörpern aus einem Komposit enthaltend mindestens ein Fasermaterial, mindestens eine Verbindung V1 und mindestens eine Verbindung V2, die funktionalisierten dreidimensionalen Formkörper als solche sowie deren Verwendung näher erläutert.

Ein erster Gegenstand der Erfindung bezieht sich auf ein Verfahren zur Herstellung eines funktionalisierten, dreidimensionalen Formkörpers aus einem Komposit in einem Werkzeug, wobei das Verfahren die Schritte a) bis d) umfasst.

In Verfahrensschritt a) wird das Komposit in das Werkzeug eingelegt, wobei das Komposit mindestens ein Fasermaterial, mindestens eine Verbindung V1 und mindestens eine Verbindung V2 enthält und wobei die Temperatur des Werkzeugs zwischen 80 °C und 180 °C liegt. Als Temperatur des Werkzeuges wird im Rahmen der vorliegenden Anmeldung verstanden, dass die Bereiche des Werkzeugs, welche mit dem Komposit in Berührung kommen, den in den Verfahrensschritten a) bis d) genannten Temperaturbereich aufweisen.

Komposite (Verbundwerkstoffe) sind dem Fachmann bekannt. Ein Komposit enthält mindestens zwei Komponenten und besitzt vorzugsweise andere Werkstoffeigenschaften als seine einzelnen Komponenten. Das Komposit enthält mindestens eine Art von Fasern, eine Verbindung V1 und eine Verbindung V2 (wie nachfolgend definiert). Gegebenenfalls können auch noch weitere Komponenten in dem in Verfahrensschritt a) eingesetzten Komposit enthalten sein. Das Komposit kann beispielsweise hergestellt werden, in dem das Fasermaterial mit den Verbindungen V1 und V2 nach dem Fachmann bekannten Methoden getränkt und/oder beschichtet wird.

Die Geometrie des Komposits kann prinzipiell beliebig sein und vorzugsweise wird ein planares Komposit eingesetzt. Planare Komposite werden auch als zweidimensionale Komposite oder Vliese bezeichnet. "planar" bedeutet in diesem Zusammenhang, dass das entsprechende Komposit, bezogen auf die 3 Raumrichtungen eines kartesischen Koordinatensystems (x-Richtung, y-Richtung sowie z-Richtung), in 2 Raumrichtungen (Dimensionen) im Vergleich zur dritten Raumrichtung deutlich größere Werte annehmen kann. Ein solches Komposit kann beispielsweise in seiner x-Richtung (Länge) und in seiner y-Richtung (Breite) jeweils Werte von 10 cm bis 2 m aufweisen. Im Gegensatz dazu ist die z-Richtung (Dicke oder Höhe) eines solchen planaren Komposits deutlich geringer, beispielsweise um den Faktor 10 oder 100, und sie kann im Bereich von wenigen Millimetern bis einigen Zentimetern liegen.

Vorzugsweise wird in Verfahrensschritt a) ein planares Komposit oder zumindest ein weitgehend planares Komposit eingesetzt, besonders bevorzugt wird ein planares Komposit eingesetzt, bei dem die einzelnen Seiten des Fasermaterials der zu erzielenden dreidimensionalen Form zugeschnitten sind.

Das Komposit weist in Verfahrensschritt a) sowohl vor dem Einlegen in das Werkzeug als auch beim Einlegen in das Werkzeug eine Temperatur auf, die im Bereich von 15 bis 40 °C, bevorzugt im Bereich von 20 bis 30 °C, besonders bevorzugt im Bereich von 23 bis 28 °C und insbesondere 25 °C liegt.

Als Fasermaterial können erfindungsgemäß prinzipiell alle dem Fachmann bekannten Fasern eingesetzt werden. Das Fasermaterial kann als Gemisch einzelner Fasern oder als Faserbündel eingesetzt werden. Hierbei können immer die gleichen Fasern verwendet werden, es ist jedoch auch möglich, dass Gemische aus zwei oder mehr unterschiedlichen Arten von Fasern eingesetzt werden. Beispiele für solche unterschiedlichen Arten von Fasern werden nachfolgend aufgeführt.

Das mindestens eine Fasermaterial kann zum Beispiel Naturfasern, vorzugsweise lignocellulosehaltige Fasern, besonders bevorzugt Fasern aus Holz, Fasern aus Bast, Blütenfasern oder Mischungen dieser Fasern, umfassen. Geeignete Fasern aus Bast umfassen beispielsweise Fasern aus Kenaf, Flachs, Jute oder Hanf, oder Mischungen dieser Fasern. Geeignete Blütenfasern umfassen beispielsweise Baumwolle.

Die Naturfasern können optional mit synthetischen Fasern, vorzugsweise Fasern aus Polyestern wie Polyethylenterephthalat (PET), Bicofasern aus PET-Copolyester, Fasern aus Polyamid (PA), Fasern aus Polypropylen (PP), oder Mischungen dieser Fasern kombiniert werden.

Vorzugsweise wird im Rahmen der vorliegenden Erfindung ein auf Naturfasern zielendes Fasermaterial eingesetzt, dem synthetische Fasern beigemischt sind. Vorzugsweise beträgt der Anteil an beigemischten synthetischen Fasern < 30 Gew.-%, bevorzugt < 20 Gew.-% bezogen auf das Gesamtgewicht des Fasermaterials.

Der Anteil des mindestens einen Fasermaterials im Komposit beträgt vorzugsweise mindestens 50 Gew.-%, besonders bevorzugt mindestens 60 Gew.-%, ganz besonders bevorzugt mindestens 70 Gew.-%, bezogen auf das Gewicht des Komposits.

Weiterhin enthält das Komposit mindestens eine Verbindung V1 und mindestens eine Verbindung V2. Die Verbindungen V1 und V2 als solche sind dem Fachmann bekannt, beispielsweise aus EPA 2596943.

Die Verbindungen V1 und V2 sind im Rahmen dieser Anmeldung alle Verbindungen, aus denen ein Duroplast hergestellt werden kann (die also zusammen unter Erhalt eines Duroplasten aushärten können). Hierfür weist Verbindung V1 vorzugsweise mindestens drei reaktive Seitengruppen auf und Verbindung V2 ist vorzugsweise eine Verbindung mit mindestens zwei reaktiven Seitengruppen, die mit den reaktiven Seitengruppen von Verbindung V1 reagieren können.

Die Verbindungen V1 und V2 sind voneinander verschiedene Verbindungen, d.h. eine Verbindung, die unter die Definition einer Verbindung V1 fällt, fällt nicht unter die Definition einer Verbindung V2 und umgekehrt. Es können aber unabhängig voneinander mehrere (zum Beispiel zwei oder drei) unterschiedliche Verbindungen V1 und/oder V2 eingesetzt werden.

Die Anteile der Verbindungen V1 und V2 betragen im Komposit zusammen vorzugsweise höchstens 70 Gew.-%, besonders bevorzugt höchstens 50 Gew.-%, ganz besonders bevorzugt höchstens 30 Gew.-% bezogen auf das Gewicht des Komposits.

Mehr bevorzugt ist die Verbindung V1 ein Polymer mit reaktiven Seitengruppen und die Verbindung V2 ist eine niedermolekulare Verbindung, die mit den reaktiven Seitengruppen des Polymers gemäß Verbindung V1 reagieren kann. Die reaktiven Seitengruppen der Verbindung V1 sind vorzugsweise Säuregruppen oder Epoxygruppen. Die niedermolekulare Verbindung (gemäß Verbindung V2) weist vorzugsweise ein Molekulargewicht ≤ 200 g/mol, insbesondere ≤ 150 g/mol auf. Die Verbindung V2 wird auch als Vernetzer bezeichnet und ist vorzugsweise ein Polyol, insbesondere Triethanolamin, ein Polyamin, ein Polyepoxid oder eine Polycarbonsäure.

Mehr bevorzugt ist die Verbindung V1 ein Polymer auf Basis von Acrylsäure, Methacrylsäure, Styrol/Acrylsäure-Copolymeren, Styrol/Methacrylsäure-Copolymeren, Maleinsäure oder ein Polymer auf Basis von Alkalisalzen oder Estern der Acrylsäure oder Methacrylsäure wie (Meth)Acrylaten und Styrol/(Meth)Acrylat-Copolymeren oder ein Polymer auf Basis von Formaldehyd-Harzen, Polyestern, Epoxid-Harzen oder Polyurethanen.

Besonders bevorzugt ist die Verbindung V1 ein Acrylsäure/Styrol/Acrylat-Copolymer.

Beispiele für bevorzugte Formaldehydharze sind Harnstoff-Formaldehydharze (UF-Harze), Phenol-Formalehydharze (PF-Harze), Melamin-Formaldehydharze (MF-Harze) und Melamin-Harnstoff-Formaldehydharze (MUF-Harze). Die vorgenannten Verbindungen V1, vorzugsweise die vorgenannten Polymere, können auch als Dispersionen eingesetzt werden, vorzugsweise als wässrige Dispersionen.

Weiterhin ist es bevorzugt, dass die Verbindung V1 und V2 als Gemische eingesetzt werden. Solche Gemische werden auch als Bindemittel oder Binder bezeichnet und sie sind beispielsweise kommerziell erhältlich als Acrodur® (BASF SE). Die Verbindungen V1 und V2 gemeinsam, beziehungsweise deren Gemische, lassen sich zu einem Duroplasten aushärten (duroplastisch verformbar), vorzugsweise erfolgt dies unter Zufuhr von Wärme.

Weiterhin kann das Komposit neben mindestens einem Fasermaterial, mindestens einer Verbindung V1 und mindestens einer Verbindung V2 noch weitere Bestandteile enthalten, vorzugsweise einen oder mehrere Katalysatoren. Geeignete Katalysatoren sind vorzugsweise phosphorhaltige Katalysatoren, insbesondere Natrium-Hypophosph it.

Das im Verfahren gemäß der vorliegenden Erfindung benutzte Werkzeug als solches ist dem Fachmann bekannt. Vorzugsweise ist es ein kombiniertes Press- und Spritzgusswerkzeug, in welchem zum Beispiel sowohl verformt (verpresst), geheizt sowie angespritzt (zum Beispiel mit einem Polyamid) werden kann. Hierfür kann das Werkzeug sowohl Kavitäten zur Aufnahme des Komposits, als auch Kavitäten zur Aufnahme des Spritzgusspolymers aufweisen. Vorzugsweise hat ein solches Werkzeug mehrere solcher Kavitäten. Durch das Einlegen und/oder Verformen des Komposits (Verfahrensschritte a) und b)) werden vorzugsweise nicht alle Kavitäten im Werkzeug ausgefüllt. In diese freien Kavitäten wird vorzugsweise in Verfahrensschritt c) das Spritzgusspolymer eingeführt. Dem Fachmann sind solche Werkzeuge bekannt. Beispielsweise sind solche Werkzeuge in DE 10 2011 005 350 A1, EP 2 502 723 A1 oder DE 10 2012 022 633 A1 offenbart.

Vorzugsweise ist das Werkzeug des Verfahrens der vorliegenden Erfindung ein kombiniertes Press- und Spritzgusswerkzeug für Spritzgusspolymere, besonders bevorzugt ist das Werkzeug des Verfahrens der vorliegenden Erfindung ein kombiniertes Press- und Spritzgusswerkzeug für Thermoplasten.

Vorzugsweise liegt in Verfahrensschritt a) die Temperatur des Werkzeugs zwischen 80 °C und 180 °C, mehr bevorzugt zwischen 85 °C und 120 °C.

Vorzugsweise wird das Komposit vor dem Verformen in Verfahrensschritt b) somit nicht außerhalb des Werkzeuges auf eine Temperatur oberhalb von 40 °C, mehr bevorzugt oberhalb von 30 °C, besonders bevorzugt oberhalb von 28 °C und insbesondere oberhalb von 25 °C geheizt und wird in Verfahrensschritt a) in ein Werkzeug eingelegt, welches vor dem Einlegen des Komposits in Verfahrensschritt a) auf mindestens 80 °C, bevorzugt mindestens 85 °C geheizt wurde.

In Verfahrensschritt b) wird das Komposit im Werkzeug zu einem dreidimensionalen Formkörper umgeformt.

Das Umformen als solches ist dem Fachmann bekannt. Umformen bedeutet vorzugsweise, dass die Geometrie des Komposits geändert wird, beispielsweise durch vollständiges oder zumindest teilweises Verbiegen des entsprechenden Komposits. Die Geometrie des Komposits ändert sich somit in Bezug auf mindestens eine der 3 Raumrichtungen eines kartesischen Koordinatensystems. Die Geometrie des aus Verfahrensschritt b) resultierenden dreidimensionalen Formkörpers wird durch die Form des Werkzeugs bestimmt. Vorzugsweise wird in Verfahrensschritt b) ein planares Komposit so umgeformt, dass sich die Werte der Dimension in z-Richtung des entsprechenden dreidimensionalen Formkörpers gegenüber den entsprechenden Werten des planaren Komposits erhöht, vorzugsweise um den Faktor von mindestens 2.

Das Verformen des Komposits im Werkzeug ist vorzugsweise ein Verpressen des Komposits. Verpressen als solches ist dem Fachmann bekannt.

In Verfahrensschritt b) liegt die Temperatur des Werkzeugs in einem Bereich zwischen 80 °C und 180 °C. Vorzugsweise liegt in Verfahrensschritt b) die Temperatur des Werkzeugs zwischen 85 °C und 160 °C, mehr bevorzugt zwischen 90 °C und 120 °C.

Im Verfahrensschritt c) wird der dreidimensionale Formkörper durch Anspritzen mit mindestens einem Spritzgusspolymer im Werkzeug funktionalisiert.

Das Funktionalisieren als solches ist dem Fachmann bekannt. Hierunter ist vorzugsweise das Anbringen von gewünschten Elementen, zum Beispiel das Anbringen von Verrippungen für Stabilität und Festigkeit, Montagehilfen, Kartentaschen und Ähnlichem, zu verstehen. Diese Elemente werden aus dem Spritzgusspolymer durch Anspritzen des Komposits oder des daraus gebildeten dreidimensionalen Formkörpers erhalten. Vorzugsweise wird in Verfahrensschritt c) der dreidimensionale Formkörper gemäß Verfahrensschritt b) funktionalisiert.

Das Anspritzen als solches ist dem Fachmann ebenfalls bekannt. Hierbei werden vorzugsweise ein oder mehrere Bereiche der Oberfläche des Komposits oder des daraus resultierenden dreidimensionalen Formkörpers mit aus Spritzgusspolymer gebildeten Elementen versehen. Geeignete Elemente sind vorstehend bereits im Rahmen des Begriffs "Funktionalisieren" definiert worden. Im Rahmen der vorliegenden Erfindung wird das Anspritzen vorzugsweise so durchgeführt, dass in Verfahrensschritt c) im Werkzeug vorhandene freie Kavitäten mit dem Spritzgusspolymer gefüllt werden. Diese freien Kavitäten bestimmen die konkrete Formgebung der Elemente, die durch Anspritzen auf die entsprechende Oberfläche des Komposits oder des daraus resultierenden dreidimensionalen Formkörpers aufgebracht werden.

Das in Verfahrensschritt c) verwendete Spritzgusspolymer als solches ist dem Fachmann bekannt. Vorzugsweise ist das Spritzgusspolymer ein hochtemperaturstabiler Thermoplast, wie beispielsweise Polyamid (PA), mehr bevorzugt ein Thermoplast mit einem Schmelzpunkt ≥ 100 °C. Noch mehr bevorzugt ist der Thermoplast ausgewählt aus Polyoxymethylen (POM), Polybutylenterephthalat (PBT), Polyethylenterephthalat (PET), Polyamid 6, Polyamid 6.6, Polyamid 6.10, Polyamid 6.12, Polyamid 11 oder Polyamid 12, besonders bevorzugt ist der Thermoplast ausgewählt aus Polyamid 6, Polyamid 6.6, Polyamid 6.10, Polyamid 6.12, Polyamid 11 oder Polyamid 12. Solche Polymere sind beispielsweise kommerziell erhältlich als Ultramid® (BASF SE).

Das Spritzgusspolymer kann außerdem dadurch modifiziert werden, dass das Spritzgusspolymer zu höchstens 70 Gew.-%, vorzugsweise zu höchstens 50 Gew.-%, besonders bevorzugt zu höchstens 30 Gew.-%, bezogen auf das Gesamtgewicht des Spritzgusspolymers, mit Material ausgewählt aus Glasfasern, Kohlefasern, Aramidfasern, Naturfasern, Glaskugeln oder Mischungen davon, verstärkt ist.

Das in Verfahrensschritt c) verwendete Spritzgusspolymer ist in der Regel in Schmelze, wenn es in das Werkzeug eingebracht wird, um das Funktionalisieren durch Anspritzen durchzuführen. Vorzugsweise ist dabei das Spritzgusspolymer auf eine Temperatur von mindestens 160 °C, vorzugsweise auf eine Temperatur von mindestens 250 °C, besonders bevorzugt auf eine Temperatur von mindestens 300 °C aufgeheizt, wenn es in Verfahrensschritt c) in das Werkzeug eingebracht wird.

Im erfindungsgemäßen Verfahren ist die Reihenfolge (zeitlicher Ablauf) der Verfahrensschritte b) und c) wie vorstehend bereits erwähnt, nicht zwingend festgelegt, sondern kann im Rahmen der nachfolgenden zwei Optionen i) und ii) ausgewählt werden. So kann gemäß Option i) Verfahrensschritt c) während der Durchführung von Verfahrensschritt b) gestartet werden, oder es kann gemäß Option ii) Verfahrensschritt c) erst nach Beendigung des Verfahrensschritts b) gestartet werden. Bei beiden Optionen i) und insbesondere ii) erfolgt das Funktionalisieren in einem weitgehend oder bereits vollständig ausgebildeten dreidimensionalen Formkörper.

Erfindungsgemäß ist es bevorzugt, dass Verfahrensschritt c) erst nach Beendigung des Verfahrensschritts b) gestartet wird.

In den Optionen i) und ii) ist es möglich, dass die Verfahrensschritte b) und c) gleich lang dauern, dass Verfahrensschritt b) länger dauert als Verfahrensschritt c) oder dass Verfahrensschritt c) länger dauert als Verfahrensschritt b). Wie vorstehend bereits erwähnt, kann gegebenenfalls im Rahmen der Option iii) ein Zwischenschritt, vorzugsweise ein Temperierschritt, durchgeführt werden, bevor Verfahrensschritt c) gestartet wird. Die Dauer der Durchführung der einzelnen Verfahrensschritte b) und/oder c) ist prinzipiell frei wählbar und dem Fachmann bekannt. In der Regel werden die einzelnen Verfahrensschritte b) und c) so lange durchgeführt, bis das gewünschte Ereignis eingetreten ist, also in Verfahrensschritt b) die Verformung des Komposits abgeschlossen und in Verfahrensschritt c) der dreidimensionale Formkörper vollständig an den hierfür vorgesehenen Stellen mit dem Spritzgusspolymer versehen ist.

In Verfahrensschritt c) kann die Temperatur des Werkzeugs prinzipiell beliebige Werte annehmen, sofern Verfahrensschritt c) erst nach Beendigung des Verfahrensschritts b) gestartet wird. Vorzugsweise sind bei dieser Fallkonstellation die entsprechenden Temperaturwerte in Übereinstimmung mit den vorstehend für den Verfahrensschritt b) genannten Temperaturbereichsangaben (inklusive der bevorzugten Werte). Sofern der der Verfahrensschritt c) während der Durchführung des Verfahrensschritt b) gestartet wird, ist die Temperatur des Werkzeugs bis zur Beendigung des Verfahrensschritts b) in beiden Verfahrensschritten (zwangsläufig) identisch. Nach Beendigung des Verfahrensschrittes b) kann die Temperatur ebenfalls prinzipiell beliebige Werte annehmen. Vorzugsweise wird die Temperatur in einem solchen Fall abgesenkt auf eine Temperatur im Bereich von 80 bis 160 °C und besonders bevorzugt von 85 bis 140 °C und insbesondere von 90 bis 120 °C.

In Verfahrensschritt d) wird der funktionalisierte, dreidimensionale Formkörper aus dem Werkzeug entnommen. Zu diesem Zeitpunkt ist der funktionalisierte, dreidimensionale Formkörper vorzugsweise bereits vollständig ausgehärtet, gegebenenfalls kann aber auch ein nur teilweise ausgehärteter funktionalisierter, dreidimensionaler Formkörper in Verfahrensschritt d) aus dem Werkzeug entnommen werden. Gegebenenfalls kann das duroplastische Aushärten auch außerhalb des Werkzeuges fortgesetzt werden. Dem Fachmann ist die Entnahme des funktionalisierten, dreidimensionalen Formkörpers aus dem Werkzeug gemäß Verfahrensschritt d) auch unter der Bezeichnung "Entformung" bekannt.

Die Temperatur des Werkzeugs in Verfahrensschritt d) kann prinzipiell ebenfalls beliebige Werte annehmen. Vorzugsweise sind aber die entsprechenden Temperaturwerte in Übereinstimmung mit den in Schritt c) gewählten Temperaturwerten.

Weiterhin kann die Temperatur des Werkzeugs in den Verfahrensschritten a) bis d) unabhängig voneinander variiert werden. Bevorzugt wird die Temperatur in den Verfahrensschritten a) bis d) allerdings konstant gehalten.

Gegebenenfalls können im Anschluss an Verfahrensschritt d) weitere Verfahrensschritte durchgeführt werden, beispielsweise eine Weiterverarbeitung des funktionalisierten, dreidimensionalen Formkörpers in Abhängigkeit von der gewünschten Verwendung.

Wie vorstehend bereits ausgeführt, härten die Verbindung V1 und Verbindung V2 im Werkzeug durch Vernetzung duroplastisch (also unter Erhalt eines Duroplasten) aus.

Vernetzung bzw. vernetzen bedeutet hierbei eindimensionale, zweidimensionale oder dreidimensionale Vernetzung, wobei die dreidimensionale Vernetzung bevorzugt ist. Die Vernetzung ist irreversibel, so dass hierdurch das Komposit bzw. der dreidimensionale Formkörper duroplastisch ausgehärtet wird. Der Umfang der Vernetzung kann durch die Dauer des Verbleibs im Werkzeug und/oder die Temperatur des Werkzeugs gesteuert werden.

Wie vorstehend bereits erwähnt, erfolgt das duroplastische Aushärten der Verbindungen V1 und V2 durch die Zufuhr von Wärme. Die zum Aushärten erforderliche Wärme wird erfindungsgemäß durch die in den Verfahrensschritten a), b) und/oder c) eingestellte Temperatur des Werkzeugs auf das Komposit beziehungsweise den daraus erhaltenen dreidimensionalen Formkörper oder den funktionalisierten dreidimensionalen Formkörper übertragen.

Gegebenenfalls können zwischen den jeweiligen Verfahrensschritten noch ein oder mehrere Zwischenschritte durchgeführt werden, beispielsweise in dem das Komposit oder der dreidimensionale Formkörper, den für die Verfahrensschritte a) bis c) angegebenen Temperaturbereichen des Werkzeugs ausgesetzt wird, ohne dass eine weitere Handlung mit dem Komposit oder dem Formkörper durchgeführt wird, wie beispielsweise das Verformen gemäß Verfahrensschritt b) oder das Funktionalisieren gemäß Verfahrensschritt c). Solche Zwischenschritte werden auch als Temperierschritte bezeichnet, gegebenenfalls kann sich ein solcher Temperierschritt auch nach Beendigung des Verfahrensschritts c) anschließen.

Erfindungsgemäß kann das duroplastische Aushärten bereits während des Einlegens des Komposits in das aufgeheizte Werkzeug gemäß Verfahrensschritt a) beginnen/erfolgen, also sobald das Komposit mit der Wärmequelle in Kontakt kommt. Ob und in welchem Umfang bereits ein Aushärten während des Verfahrensschrittes a) stattfindet, ist prinzipiell unerheblich. Das Aushärten wird vorzugsweise durch die eingestellte Temperatur und/oder Dauer der Durchführung der Verfahrensschritte b) und/oder c) sowie ebenfalls als vorgelagerte, zwischengelagerte oder nachgelagerte Temperierschritte (Zwischenschritte) gesteuert. Vorzugsweise bleibt das Komposit beziehungsweise der daraus hergestellte funktionalisierte dreidimensionale Formkörper solange im Werkzeug, bis das duroplastische Aushärten weitgehend oder insbesondere vollständig abgeschlossen ist. Der Fachmann erkennt die Beendigung des Aushärtungsvorganges vorzugsweise daran, dass der funktionalisierte dreidimensionale Formkörper nicht mehr reversibel verformt werden kann.

Im erfindungsgemäßen Verfahren ist es bevorzugt, dass
i) die Temperatur des Werkzeugs in den Verfahrensschritten a) und b) unabhängig voneinander zwischen 80 °C und 180 °C, vorzugsweise zwischen 85 °C und 120 °C liegt, und/oder
ii) die Temperatur des Werkzeugs in den Verfahrensschritten a) bis d) zwischen 80 °C und 180 °C, vorzugsweise zwischen 85 °C und 160 °C, besonders bevorzugt zwischen 90 °C und 120 °C liegt, und/oder
iii) mindestens ein zusätzlicher Temperierschritt vor Verfahrensschritt b), vor Verfahrensschritt c) und/oder nach Verfahrensschritt c) durchgeführt wird, wobei die Temperatur des Werkzeugs in den Verfahrensschritten a) bis d) zwischen 80 °C und 180 °C, vorzugsweise zwischen 85 °C und 160 °C, besonders bevorzugt zwischen 90 °C und 120 °C liegt.

Weiterhin ist es bevorzugt, dass im erfindungsgemäßen Verfahren die Temperatur des Werkzeugs in den Verfahrensschritten a) und b), vorzugsweise in den Verfahrensschritten a) bis d) konstant gehalten wird Sofern ein oder mehrere Zwischenschritte, vorzugsweise Temperierschritte, durchgeführt werden, ist es weiterhin bevorzugt, dass auch dort die selbe konstante Temperatur wie in den Verfahrensschritten a) bis d) eingestellt wird.

Eine bevorzugte Ausführungsform des erfindungsgemäßen Verfahrens umfasst die Schritte a) bis d), die wie folgt definiert sind:
a) Einlegen des Komposits in das Werkzeug, wobei das Komposit ein Acrylsäure/Styrol-Acrylat-Copolymer, eine Mischung aus Naturfasern, Synthesefasern und ein Polyol enthält, das Komposit eine Temperatur im Bereich von 15 bis 40 °C aufweist und die Temperatur des Werkzeugs zwischen 80 °C und 180 °C liegt,
b) Verformen des Komposits zu einem dreidimensionalen Formkörper des Werkzeugs, wobei die Temperatur des Werkzeugs zwischen 80 °C und 180 °C liegt,
c) Funktionalisieren des dreidimensionalen Formkörpers im Werkzeug durch Anspritzen mit einem Spritzgusspolymer, aufgeheizt auf eine Temperatur von mindestens 160 °C, und
d) Entnehmen des funktionalisierten, dreidimensionalen Formkörpers aus dem Werkzeug,
wobei das Polymer auf Basis von Acrylsäure und/oder Styrol/Acrylat-Copolymeren und Verbindung V2 im Werkzeug durch Reaktion miteinander vernetzen und duroplastisch aushärten und Verfahrensschritt c) erst nach Beendigung des Verfahrensschritts b) gestartet wird,
wobei nach Verfahrensschritt b) und vor Verfahrensschritt c) oder während Verfahrensschritt c) ein zusätzlicher Temperierschritt durchgeführt wird, in dem der Komposit im Werkzeug einer Temperatur zwischen 80 °C und 180 °C ausgesetzt wird.

Ein weiterer Gegenstand der vorliegenden Erfindung betrifft dreidimensionale, funktionalisierte Formkörper erhältlich durch das erfindungsgemäße Verfahren. Die durch das erfindungsgemäße Verfahren hergestellten dreidimensionalen, funktionalisierten Formkörper liegen vorzugsweise in der Form von Kraftfahrzeug-Innenraumteilen oder als Form verwendbar in der Möbelindustrie vor.

Die durch das erfindungsgemäße Verfahren hergestellten dreidimensionalen funktionalisierten Formkörper finden vorzugsweise Verwendung im Kraftfahrzeugbau und/oder in der Möbelindustrie, bevorzugt im Sonneneinstrahlbereich eines Kraftfahrzeugs, besonders bevorzugt für Türträgermodule, Hutablagen, Armaturentafeln oder Armauflagen am Fenster eines Kraftfahrzeugs.

Alle Definitionen, die für den erfindungsgemäßen Prozess aufgestellt wurden, gelten auch für die dreidimensionalen, funktionalisierten Formkörper und deren Verwendung.

Die vorliegende Erfindung wird durch die nachfolgenden Beispiele näher erläutert, ohne sich jedoch hierauf zu beschränken.

In den Beispielen werden folgende Verbindungen verwendet:
- Acrodur 2850 X:: thermoplastisch aushärtendes Bindemittel
- Acrodur DS 3515:: duroplastisch aushärtende Styrol/Acrylat-Dispersion modifiziert mit einer Polycarbonsäure und einem Polyol als Vernetzer
- Acrodur 950 L:: duroplastisch aushärtende Lösung aus einer Polycarbonsäure und einem Polyol als Vernetzer
- Ultramid B3WG6:: hochtemperaturstabiler Thermoplast auf Basis von Polycaprolactam

Die nachfolgenden Beispiele wurden in einer Anlage der Firma Kraus Maffei der Serie KM 300 - 1400 CS mit einem kombinierten Press- und Spritzgusswerkzeug der Bezeichnung GK Nr. 10104 durchgeführt.

Das Vorheizen von Kompositen erfolgte im IR-Feld auf 180 °C für 60 Sekunden.

### A) Herstellung thermoplastischer Formkörper I:

Eine Naturfasermatte aus Vlies der Fläche 45 x 45 cm² wird mit einer 28 %-igen Lösung von Acrodur 2850 X imprägniert und das so erhaltene Komposit mit der Temperatur T1 in ein Press- und Spritzgusswerkzeug der Temperatur T2 überführt. Das Komposit wird bei 100 °C auf eine Restfeuchte von < 2 % getrocknet und bei 170 °C innerhalb von 30 Sekunden auf eine Solldicke von 1,6 bis 1,8 mm verpresst. Anschließend wird das Komposit mit Ultramid B3WG6 angespritzt und funktionalisiert.

In den Versuchen A1 bis A4 werden thermoplastisch aushärtende Formkörper unter verschiedenen Temperaturen T1 und T2 hergestellt. Die Ergebnisse dazu befinden sich in Tabelle 1.

### B) Herstellung thermoplastischer Formkörper II:

Eine Holzfasermatte der Fläche 45 x 45 cm² wird mit einer 20 %-igen Lösung von Acrodur 2850 X imprägniert und das so erhaltene Komposit mit der Temperatur T1 in ein Press- und Spritzgusswerkzeug der Temperatur T2 überführt. Das Komposit wird bei 100 °C auf eine Restfeuchte von < 2 % getrocknet und bei 170 °C innerhalb von 30 Sekunden auf eine Solldicke von 1,6 bis 1,8 mm verpresst. Anschließend wird das Komposit mit Ultramid B3WG6 angespritzt und funktionalisiert.

In den Versuchen B1 bis B4 werden thermoplastisch aushärtende Formkörper unter verschiedenen Temperaturen T1 und T2 hergestellt. Die Ergebnisse dazu befinden sich in Tabelle 1.

### C) Herstellung duroplastischer Formkörper auf Basis von Styrol/Acrylat-Polymeren:

Eine Naturfasermatte aus Vlies der Fläche 45 x 45 cm² wird mit einer 50 %-igen Lösung von Acrodur DS 3515 imprägniert und das so erhaltene Komposit mit der Temperatur T1 in ein Press- und Spritzgusswerkzeug der Temperatur T2 überführt. Das Komposit wird bei 100 °C auf eine Restfeuchte von < 2 % getrocknet und bei 150 °C sowie bei einem Druck von 4 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen C1 bis C4 werden duroplastisch aushärtende Formkörper unter verschiedenen Temperaturen T1 und T2 hergestellt. Die Ergebnisse dazu befinden sich in Tabelle 1.

### D) Herstellung duroplastischer Formkörper auf Basis von Polycarbonsäuren:

Eine Holzfasermatte der Fläche 45 x 45 cm² wird mit einer 35 %-igen Lösung von Acrodur 950 L imprägniert und das so erhaltene Komposit mit der Temperatur T1 in ein Press- und Spritzgusswerkzeug der Temperatur T2 überführt. Das Komposit wird bei 80 °C auf eine Restfeuchte von < 2 % getrocknet und bei 150 °C sowie bei einem Druck von 5 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen D1 bis D4 werden duroplastisch aushärtende Formkörper unter verschiedenen Temperaturen T1 und T2 hergestellt. Die Ergebnisse dazu befinden sich in Tabelle 1.

### E) Herstellung duroplastischer Formkörper auf Basis von Styrol/Acrylat-Polymeren:

Eine Naturfasermatte aus Vlies der Fläche 45 x 45 cm² wird mit einer 50 %-igen Lösung von Acrodur DS 3515 imprägniert und das so erhaltene Komposit mit der Temperatur T1 in ein Press- und Spritzgusswerkzeug der Temperatur T2 überführt. Das Komposit wird bei 100 °C auf eine Restfeuchte von < 2 % getrocknet und bei 110 °C sowie bei einem Druck von 4 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen E1 bis E4 werden duroplastisch aushärtende Formkörper unter verschiedenen Temperaturen T1 und T2 hergestellt. Die Ergebnisse dazu befinden sich in Tabelle 1.

### F) Herstellung duroplastischer Formkörper auf Basis von Polycarbonsäuren:

Eine Holzfasermatte der Fläche 45 x 45 cm² wird mit einer 35 %-igen Lösung von Acrodur 950 L imprägniert und das so erhaltene Komposit mit der Temperatur T1 in ein Press- und Spritzgusswerkzeug der Temperatur T2 überführt. Das Komposit wird bei 80 °C auf eine Restfeuchte von < 2 % getrocknet und bei 110 °C sowie bei einem Druck von 5 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen F1 bis F4 werden duroplastisch aushärtende Formkörper unter verschiedenen Temperaturen T1 und T2 hergestellt. Die Ergebnisse dazu befinden sich in Tabelle 1.

### G) Herstellung duroplastischer Formkörper auf Basis von Styrol/Acrylat-Polymeren:

Eine Naturfasermatte aus Vlies der Fläche 45 x 45 cm², wobei 20 % der in der Naturfasermatte enthaltenen Fasern Fasern aus Polyethylenterephthalat sind, wird mit einer 50 %-igen Lösung von Acrodur DS 3515 imprägniert und das so erhaltene Komposit mit der Temperatur T1 in ein Press- und Spritzgusswerkzeug der Temperatur T2 überführt. Das Komposit wird bei 100 °C auf eine Restfeuchte von < 2 % getrocknet und bei 150 °C sowie bei einem Druck von 4 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen G1 bis G4 werden duroplastisch aushärtende Formkörper unter verschiedenen Temperaturen T1 und T2 hergestellt. Die Ergebnisse dazu befinden sich in Tabelle 1.

### H) Herstellung duroplastischer Formkörper auf Basis von Polycarbonsäuren:

Eine Holzfasermatte der Fläche 45 x 45 cm², wobei 20 % der in der Naturfasermatte enthaltenen Fasern Fasern aus Polyethylenterephthalat sind, wird mit einer 35 %-igen Lösung von Acrodur 950 L imprägniert und das so erhaltene Komposit mit der Temperatur T1 in ein Press- und Spritzgusswerkzeug der Temperatur T2 überführt. Das Komposit wird bei 80 °C auf eine Restfeuchte von < 2 % getrocknet und bei 150 °C sowie bei einem Druck von 5 bar innerhalb von 20 Sekunden auf eine Solldicke von 1,6 bis 1,8 mm verpresst. Anschließend wird das Komposit mit Ultramid B3WG6 angespritzt und funktionalisiert.

In den Versuchen H1 bis H4 werden duroplastisch aushärtende Formkörper unter verschiedenen Temperaturen T1 und T2 hergestellt. Die Ergebnisse dazu befinden sich in Tabelle 1.

Der Einfluss der Temperaturen T1 des Komposits und T2 des Werkzeuges beim Einlegen des Komposits spielt eine entscheidende Rolle für die Qualität des Endprodukts (siehe Tabelle 1).

Bei den mit (V) bezeichneten Beispielen handelt es sich um Vergleichsbeispiele.

Werkzeug mit der Bezeichnung "vorgeheizt" wurde auf eine Temperatur T2 von 110 bis 115 °C vorgeheizt und während der Herstellung der Formkörper in diesem Temperaturbereich gehalten.

Produkte, deren Verformbarkeit nicht den weiteren Anforderungen genügt, weisen Risse auf und sind in Tabelle 1 entsprechend als mangelhaft bezeichnet. Die als mangelhaft bezeichneten Produkte werden nicht weiter auf ihre Entformbarkeit untersucht. Zusätzlich werden Produkte, welche sich durch das Herauslösen aus dem Spritzgusswerkzeug verziehen als mangelhaft bezeichnet. Produkte, die beim Entformen als mangelhaft bezeichnet werden, werden nicht weiter auf deren Temperaturbeständigkeit untersucht.

### Fazit:

Thermoplastisch aushärtende Komposite (A1 bis A4 und B1 bis B4) zeigen unabhängig von der Temperatur des Werkzeugs prinzipiell gute Verformbarkeit, sofern entweder das Werkzeug oder das thermoplastisch aushärtbare Komposit erhitzt wurden. Thermoplastisch aushärtbare Komposite können aber nur dann ohne Verzug aus dem Spritzgusswerkzeug entfernt werden, wenn dieses während der Entformung nicht geheizt wurde (A2 und B2). Folglich muss das Spritzgusswerkzeug auf eine niedrigere Temperatur eingestellt sein als die Schmelze des thermoplastisch aushärtenden Komposits, damit die Schmelze im Spritzgusswerkzeug abkühlt und erstarrt.

Duroplastisch aushärtende Komposite lassen sich im Gegensatz dazu nur in eine dreidimensionale Form bringen, wenn sie ohne vorherige Erwärmung in ein heißes Werkzeug eingelegt werden (C3, D3). Werden sie noch vor der Verformung aufgeheizt und dadurch in ihren duroplastischen Zustand überführt, sind die duroplastischen Komposite danach nicht mehr verformbar.

### Temperaturbeständigkeit:

Zur Untersuchung der Temperaturbeständigkeit der Formkörper wurden aus dem verarbeiteten Material aus den Beispielen A2, B2, C3, D3, E3, F3, G3 und H3 Formkörper in einer Länge von 30 cm und einer Breite von 5 cm zurechtgeschnitten. Diese wurden auf zwei Auflagen gelegt, die 25 cm voneinander entfernt sind. Auf die Formkörper wurde mittig ein Gewicht von 100 g platziert und dieser Aufbau bei 120 °C für 30 Minuten in einen Trockenschrank gestellt. Nach Beendigung der Verweilzeit im Trockenschrank wurde die Auslenkung (Durchbiegung) aus der Horizontalen des Formkörpers gemessen. Der Formkörper wurde für temperaturbeständig befunden, wenn keine Auslenkung aus der Horizontalen des Formkörpers gemessen wurde.

### Fazit:

Duroplastisch aushärtende Komposite (C3, D3, E3, F3, G3 und H3) sind auch bei erhöhten Temperaturen (z.B. 120 °C) stabil und verändern dabei nicht ihre Form. Dadurch eignen sich die duroplastisch aushärtenden Komposite auch hervorragend für den Einsatz in Bereichen, in denen Materialien höheren Temperaturen ausgesetzt sind und die höhere Schmelzpunkte des Materials erfordern. Thermoplastisch aushärtende Komposite werden bei erhöhten Temperaturen wieder verformbar und sind damit nicht für die gleichen Einsatzgebiete nutzbar wie die duroplastisch aushärtenden Komposite.

**abelle 1.**

| **Experiment** | **T1 [°C]** | **T2 [°C]** | **Verformbarkeit** | **Entformbarkeit** | **Temperaturbeständigkeit** |
|---|---|---|---|---|---|
| A1 (V) | 25 | 25 | mangelhaft | - | - |
| A2 (V) | 180 | 25 | gut | gut | mangelhaft |
| A3 (V) | 25 | vorgeheizt | gut | mangelhaft | - |
| A4 (V) | 180 | vorgeheizt | gut | mangelhaft | - |
| B1 (V) | 25 | 25 | mangelhaft | - | - |
| B2 (V) | 180 | 25 | gut | gut | mangelhaft |
| B3 (V) | 25 | vorgeheizt | gut | mangelhaft | - |
| B4 (V) | 180 | vorgeheizt | gut | mangelhaft | - |
| C1 (V) | 25 | 25 | mangelhaft | - | - |
| C2(V) | 180 | 25 | mangelhaft | - | - |
| C3 | 25 | vorgeheizt | gut | gut | gut |
| C4 (V) | 180 | vorgeheizt | mangelhaft | - | - |
| D1 (V) | 25 | 25 | mangelhaft | - | - |
| D2 (V) | 180 | 25 | mangelhaft | - | - |
| D3 | 25 | vorgeheizt | gut | gut | gut |
| D4 (V) | 180 | vorgeheizt | mangelhaft | - | - |
| E1 (V) | 25 | 25 | mangelhaft | - | - |
| E2(V) | 180 | 25 | mangelhaft | - | - |
| E3 | 25 | vorgeheizt | gut | gut | gut |
| E4 (V) | 180 | vorgeheizt | mangelhaft | - | - |
| F1 (V) | 25 | 25 | mangelhaft | - | - |
| F2 (V) | 180 | 25 | mangelhaft | - | - |
| F3 | 25 | vorgeheizt | gut | gut | gut |
| F4 (V) | 180 | vorgeheizt | mangelhaft | - | - |
| G1 (V) | 25 | 25 | mangelhaft | - | - |
| G2(V) | 180 | 25 | mangelhaft | - | - |
| G3 | 25 | vorgeheizt | gut | gut | gut |
| G4 (V) | 180 | vorgeheizt | mangelhaft | - | - |
| H1 (V) | 25 | 25 | mangelhaft | - | - |
| H2 (V) | 180 | 25 | mangelhaft | - | - |
| H3 | 25 | vorgeheizt | gut | gut | gut |
| H4 (V) | 180 | vorgeheizt | mangelhaft | - | - |

## Patentansprüche

1. Verfahren zur Herstellung eines funktionalisierten, dreidimensionalen Formkörpers aus einem Komposit in einem Werkzeug, wobei das Verfahren die folgenden Schritte a) bis d) umfasst:
e) Einlegen des Komposits in das Werkzeug, wobei das Komposit mindestens ein Fasermaterial, mindestens eine Verbindung V1 und mindestens eine Verbindung V2 enthält und die Temperatur des Komposits beim Einlegen im Bereich zwischen 15 und 40 °C liegt,
f) Verformen des Komposits zu einem dreidimensionalen Formkörper im Werkzeug,
g) Funktionalisieren des Komposits oder des dreidimensionalen Formkörpers durch Anspritzen mit mindestens einem Spritzgusspolymer im Werkzeug und
h) Entnehmen des funktionalisierten, dreidimensionalen Formkörpers aus dem Werkzeug,
**dadurch gekennzeichnet, dass** die Verbindungen V1 und V2 im Werkzeug durch Vernetzung duroplastisch aushärten und die Temperatur des Werkzeugs mindestens in den Verfahrensschritten a) und b) unabhängig voneinander im Bereich zwischen 80 °C und 180 °C liegt, wobei
i) Verfahrensschritt c) während der Durchführung von Verfahrensschritt b) gestartet wird, oder
ii) Verfahrensschritt c) erst nach Beendigung des Verfahrensschritts b) gestartet wird.

2. Verfahren gemäß Anspruch 1, **dadurch gekennzeichnet, dass** das mindestens eine Fasermaterial Naturfasern, vorzugsweise lignocellulosehaltige Fasern, besonders bevorzugt Fasern aus Holz, Fasern aus Bast, Blütenfasern oder Mischungen dieser Fasern, umfasst,
wobei die Naturfasern optional mit synthetischen Fasern, vorzugsweise Fasern aus Polyestern, Copolyestern, Bicofasern aus Polyethylenterephthalat-CoPolyester, Fasern aus Polyamid (PA), Fasern aus Polypropylen (PP), oder Mischungen dieser Fasern kombiniert werden können.

3. Verfahren gemäß Anspruch 1 oder 2, **dadurch gekennzeichnet, dass** die Verbindung V1 mindestens eine reaktive Seitengruppe aufweist und die Verbindung V2 eine Verbindung ist, die mit der reaktiven Seitengruppe von Verbindung V1 reagieren kann,
vorzugsweise ist die Verbindung V1 ein Polymer mit reaktiven Seitengruppen und die Verbindung V2 ist eine niedermolekulare Verbindung, die mit den reaktiven Seitengruppen des Polymers gemäß Verbindung V1 reagieren kann.

4. Verfahren gemäß einem der Ansprüche 1 bis 3, **dadurch gekennzeichnet, dass** Verbindung V1 ein Polymer auf Basis von Acrylsäure, Methacrylsäure, Styrol/Acrylsäure-Copolymeren, Styrol/Methacrylsäure-Copolymeren, Maleinsäure oder ein Polymer auf Basis von Alkalisalzen oder Estern der Acrylsäure oder Methacrylsäure wie (Meth)Acrylaten und Styrol/(Meth)Acrylat-Copolymeren oder ein Polymer auf Basis von Formaldehyd-Harzen, Polyestern, Epoxid-Harzen oder Polyurethanen, und/oder Verbindung V2 ein Polyol, Polyamin, Polyepoxid oder eine Polycarbonsäure ist.

5. Verfahren gemäß einem der Ansprüche 1 bis 4, **dadurch gekennzeichnet, dass**
i) die Temperatur des Werkzeugs in den Verfahrensschritten a) und b) unabhängig voneinander zwischen 80 °C und 180°C, vorzugsweise zwischen 85 °C und 160 °C liegt, und/oder
ii) die Temperatur des Werkzeugs in den Verfahrensschritten a) bis c) zwischen 80 °C und 180°C, vorzugsweise zwischen 85 °C und 160 °C, besonders bevorzugt zwischen 90 °C und 120 °C liegt, und/oder
iii) mindestens ein zusätzlicher Heizschritt vor Verfahrensschritt b), vor Verfahrensschritt c) und/oder nach Verfahrensschritt c) durchgeführt wird, wobei die Temperatur des Werkzeugs zwischen 80 °C und 180 °C, vorzugsweise zwischen 85 °C und 160 °C, besonders bevorzugt zwischen 90 °C und 120 °C liegt.

6. Verfahren gemäß einem der Ansprüche 1 bis 5, **dadurch gekennzeichnet, dass**
i) der Anteil des mindestens einen Fasermaterials im Komposit mindestens 50 Gew.-%, bevorzugt mindestens 60 Gew.-%, besonders bevorzugt mindestens 70 Gew.-% bezogen auf das Gewicht des Komposits beträgt, und/oder
ii) die Anteile der Verbindungen V1 und V2 im Komposit zusammen höchstens 70 Gew.-%, bevorzugt höchstens 50 Gew.-%, besonders bevorzugt höchstens 30 Gew.-% bezogen auf das Gewicht des Komposits betragen.

7. Verfahren gemäß einem der Ansprüche 1 bis 6, **dadurch gekennzeichnet, dass**
i) die Temperatur des Werkzeugs in den Verfahrensschritten a) und b), vorzugsweise in den Verfahrensschritten a) bis d) konstant gehalten wird oder um nicht mehr als 5 °C schwankt, und/oder
ii) das Komposit beim Einlegen in das Werkzeug gemäß Verfahrensschritt a) eine Temperatur aufweist, die im Bereich von 20 bis 30 °C liegt, und/oder
iii) die reaktiven Seitengruppen von Verbindung V1 Säuregruppen oder Epoxygruppen sind, und/oder
iv) das Komposit neben mindestens einem Fasermaterial, mindestens einer Verbindung V1 und mindestens einer Verbindung V2 noch weitere Bestandteile enthält, vorzugsweise einen oder mehrere Katalysatoren, mehr bevorzugt phosphorhaltige Katalysatoren, onsbesondere Natriumhypophosphit, und/oder
v) das Verfahren des Komposits in Verfahrensschritt b) als Verpressen durchgeführt wird, und oder
vi) Verfahrensschritt c) erst nach Beendigung des Verfahrensschritts b) gestartet wird.

8. Verfahren gemäß einem der Ansprüche 1 bis 7, **dadurch gekennzeichnet, dass** das Werkzeug ein kombiniertes Press- und Spritzgusswerkzeug ist, vorzugsweise ein kombiniertes Press- und Spritzgusswerkzeug für Spritzgusspolymere, besonders bevorzugt ein kombiniertes Press- und Spritzgusswerkzeug für Thermoplasten ist.

9. Verfahren gemäß einem der Ansprüche 1 bis 8, **dadurch gekennzeichnet, dass** das Spritzgusspolymer auf eine Temperatur von mindestens 160 °C, vorzugsweise auf eine Temperatur von mindestens 250 °C, besonders bevorzugt auf eine Temperatur von mindestens 300 °C, aufgeheizt ist, wenn es in Verfahrensschritt c) in das Werkzeug eingebracht wird.

10. Verfahren gemäß einem der Ansprüche 1 bis 9, **dadurch gekennzeichnet, dass** das Spritzgusspolymer ein hochtemperaturstabiler Thermoplast mit einem Schmelzpunkt größer als 100°C ist, vorzugsweise ist der Thermoplast ausgewählt aus Polyoxymethylen (POM), Polybutylenterephthalat (PBT), Polyethylenterephthalat (PET), Polyamid 6, Polyamid 6.6, Polyamid 6.10, Polyamid 6.12, Polyamid 11 oder Polyamid 12, besonders bevorzugt ist der Thermoplast ausgewählt aus Polyamid 6, Polyamid 6.6, Polyamid 6.10, Polyamid 11 oder Polyamid 12.

11. Verfahren gemäß einem der Ansprüche 1 bis 10, **dadurch gekennzeichnet, dass** das Spritzgusspolymer zu höchstens 70 Gew.-%, vorzugsweise zu höchstens 50 Gew.-%, besonders bevorzugt zu höchstens 30 Gew.-% bezogen auf das Gesamtgewicht des Spritzgusspolymers, mit Material ausgewählt aus Glasfasern, Kohlefasern, Aramidfasern, Naturfasern, Glaskugeln oder Mischungen davon, verstärkt ist.

12. Verfahren gemäß einem der Ansprüche 1 bis 11, **dadurch gekennzeichnet, dass** die Schritte a) bis d) wie folgt definiert sind:
e) Einlegen des Komposits in das Werkzeug, wobei das Komposit ein Polymer auf Basis von Acrylsäure und/oder Styrol/Acrylat-Copolymeren, ein Polyol und eine Mischung aus Naturfasern und Synthesefasern enthält, das Komposit eine Temperatur im Bereich von 15 bis 40 °C aufweist, und die Temperatur des Werkzeugs zwischen 80 °C und 180 °C liegt,
f) Verformen des Komposits zu einem dreidimensionalen Formkörper im Werkzeug, wobei die Temperatur des Werkzeugs zwischen 110°C und 150 °C liegt,
g) Funktionalisieren des dreidimensionalen Formkörpers durch Anspritzen mit einem Spritzgusspolymer, aufgeheizt auf eine Temperatur von mindestens 160 °C, im Werkzeug und
h) Entnehmen des funktionalisierten, dreidimensionalen Formkörpers aus dem Werkzeug,
**dadurch gekennzeichnet, dass** das Polymer auf Basis von Acrylsäure und/oder Styrol/Acrylat-Copolymeren und das Polyol im Werkzeug durch Reaktion miteinander vernetzen und duroplastisch aushärten und Verfahrensschritt c) erst nach Beendigung des Verfahrensschritts b) gestartet wird,
wobei nach Verfahrensschritt b) und vor Verfahrensschritt c) oder während Verfahrensschritt c) ein zusätzlicher Temperierschritt durchgeführt wird, in dem das Komposit im Werkzeug einer Temperatur zwischen 80 °C und 180 °C ausgesetzt wird.

## Claims

1. A process for the production of a functionalized, three-dimensional molding made of a composite in a mold, where the process comprises the following steps a) to d):
e) insertion of the composite into the mold, where the composite comprises at least one fiber material, at least one compound V1 and at least one compound V2, and the temperature of the composite on insertion is in the range from 15 to 40°C,
f) molding of the composite to give a three-dimensional molding in the mold,
g) functionalization of the composite or of the three-dimensional molding via injection, onto the material, of at least one injection-molding polymer in the mold and
h) removal of the functionalized, three-dimensional molding from the mold,
wherein the compounds V1 and V2 harden to give a thermoset via crosslinking in the mold, and the temperature of the mold at least in the process steps a) and b) is mutually independently in the range from 80°C to 180°C, where
i) process step c) is begun during implementation of process step b), or
ii) process step c) is begun only after process step b) has ended.

2. The process according to claim 1, wherein the at least one fiber material comprises natural fibers, preferably lignocellulose-containing fibers, particularly preferably fibers made of wood, fibers made of bast, floral fibers or mixtures of these fibers,
where the natural fibers can optionally be combined with synthetic fibers, preferably fibers made of polyesters or copolyesters, Bi-Co fibers made of polyethylene terephthalate copolyester, fibers made of polyamide (PA), fibers made of polypropylene (PP), or mixtures of these fibers.

3. The process according to claim 1 or 2, wherein the compound V1 has at least one reactive pendant group and the compound V2 is a compound which can react with the reactive pendant group of compound V1,
the compound V1 preferably being a polymer having reactive pendant groups and the compound V2 preferably being a low-molecular-weight compound which can react with the reactive pendant groups of the polymer of compound V1.

4. The process according to any of claims 1 to 3, wherein compound V1 is a polymer based on acrylic acid, on methacrylic acid, on styrene/acrylic acid copolymers, on styrene/methacrylic acid copolymers, or on maleic acid, or is a polymer based on alkali metal salts or esters of acrylic acid or methacrylic acid, for example (meth)acrylates and on styrene/(meth)acrylate copolymers, or is a polymer based on formaldehyde resins, on polyesters, on epoxy resins or on polyurethanes, and/or compound V2 is a polyol, polyamine, polyepoxide or polycarboxylic acid.

5. The process according to any of claims 1 to 4, wherein
i) the temperature of the mold in process steps a) and b) is mutually independently from 80°C to 180°C, preferably from 85°C to 160°C, and/or
ii) the temperature of the mold in process steps a) to c) is from 80°C to 180°C, preferably from 85°C to 160°C, particularly preferably from 90°C to 120°C, and/or
iii) at least one additional heating step is implemented before process step b), before process step c) and/or after process step c), where the temperature of the mold is from 80°C to 180°C, preferably from 85°C to 160°C, particularly preferably from 90°C to 120°C.

6. The process according to any of claims 1 to 5, wherein
i) the proportion of the at least one fiber material in the composite is at least 50% by weight, preferably at least 60% by weight, particularly preferably at least 70% by weight, based on the weight of the composite, and/or
ii) the proportions of the compounds V1 and V2 in the composite together are at most 70% by weight, preferably at most 50% by weight, particularly preferably at most 30% by weight, based on the weight of the composite.

7. The process according to any of claims 1 to 6, wherein
i) the temperature of the mold in process steps a) and b), preferably in process steps a) to d), is kept constant or varies by no more than 5°C, and/or
ii) the temperature of the composite on insertion into the mold in process step a) is in the range from 20 to 30°C, and/or
iii) the reactive pendant groups of compound V1 are acid groups or epoxy groups, and/or
iv) the composite comprises not only at least one fiber material, at least one compound V1 and at least one compound V2 but also other constituents, preferably one or more catalysts, more preferably phosphorus-containing catalysts, in particular sodium hypophosphite, and/or
v) the process carried out on the composite in process step b) takes the form of press-molding, and/or
vi) process step c) is begun only after process step b) has ended.

8. The process according to any of claims 1 to 7, wherein the mold is a combined compression and injection mold, preferably a combined compression and injection mold for injection-molding polymers, particularly preferably a combined compression and injection mold for thermoplastics.

9. The process according to any of claims 1 to 8, wherein when the injection-molding polymer is introduced into the mold in process step c) it has been heated to a temperature of at least 160°C, preferably to a temperature of at least 250°C, particularly preferably to a temperature of at least 300°C.

10. The process according to any of claims 1 to 9, wherein the injection-molding polymer is a high-temperature-resistant thermoplastic with a melting point above 100°C, preferably selected from polyoxymethylene (POM), polybutylene terephthalate (PBT), polyethylene terephthalate (PET), polyamide 6, polyamide 6.6, polyamide 6.10, polyamide 6.12, polyamide 11 and polyamide 12, particularly preferably from polyamide 6, polyamide 6.6, polyamide 6.10, polyamide 11 and polyamide 12.

11. The process according to any of claims 1 to 10, wherein the injection-molding polymer has been reinforced by at most 70% by weight, preferably at most 50% by weight, particularly preferably at most 30% by weight, based on the total weight of the injection-molding polymer, with material selected from glass fibers, carbon fibers, aramid fibers, natural fibers, glass beads and mixtures thereof.

12. The process according to any of claims 1 to 11, wherein the steps a) to d) are defined as follows:
e) insertion of the composite into the mold, where the composite comprises a polymer based on acrylic acid and/or on styrene/acrylate copolymers, and comprises a polyol and a mixture of natural fibers and synthetic fibers, the temperature of the composite is in the range from 15 to 40°C, and the temperature of the mold is from 80°C to 180°C,
f) molding of the composite to give a three-dimensional molding in the mold, where the temperature of the mold is from 110°C to 150°C,
g) functionalization of the three-dimensional molding via injection, onto the material, of an injection-molding polymer heated to a temperature of at least 160°C, in the mold and
h) removal of the functionalized, three-dimensional molding from the mold,
wherein the polyol and the polymer based on acrylic acid and/or on styrene/acrylate copolymers crosslink with one another via reaction in the mold and harden to give a thermoset, and process step c) is begun only after process step b) has ended,
where after process step b) and before process step c) or during process step c) an additional temperature-controlled conditioning step is implemented in which the composite is exposed to a temperature of from 80°C to 180°C in the mold.

## Revendications

1. Procédé pour la préparation d'un corps moulé fonctionnalisé, tridimensionnel à partir d'un composite dans un outil, le procédé comprenant les étapes suivantes a) à d) :
e) introduction du composite dans l'outil, le composite contenant au moins un matériau fibreux, au moins un composé V1 et au moins un composé V2 et la température du composite lors de l'introduction se situant dans une plage comprise entre 15 et 40 °C,
f) déformation du composite en un corps moulé tridimensionnel dans l'outil,
g) fonctionnalisation du composite ou du corps moulé tridimensionnel par surmoulage avec au moins un polymère de moulage par injection dans l'outil et
h) retrait du corps moulé fonctionnalisé, tridimensionnel de l'outil,
**caractérisé en ce que** les composés V1 et V2 dans l'outil durcissent de manière duroplastique par réticulation et la température de l'outil, au moins dans les étapes de procédé a) et b) indépendamment l'une de l'autre, se situe dans la plage comprise entre 80 °C et 180 °C,
i) l'étape de procédé c) étant débutée pendant la mise en œuvre de l'étape de procédé b), ou
ii) l'étape de procédé c) étant débutée seulement après la fin de l'étape de procédé b).

2. Procédé selon la revendication 1, **caractérisé en ce que** l'au moins un matériau fibreux comprend des fibres naturelles, de préférence des fibres contenant de la lignocellulose, particulièrement préférablement des fibres de bois, des fibres de liber, des fibres florales ou des mélanges de ces fibres,
les fibres naturelles pouvant éventuellement être combinées avec des fibres synthétiques, de préférence des fibres de polyesters, de copolyesters, des bicofibres de poly(téréphtalate d'éthylène)copolyester, des fibres de polyamide (PA), des fibres de polypropylène (PP), ou des mélanges de ces fibres.

3. Procédé selon la revendication 1 ou 2, **caractérisé en ce que** le composé V1 présente au moins un groupe latéral réactif et le composé V2 est un composé qui peut réagir avec le groupe latéral réactif du composé V1,
de préférence le composé V1 est un polymère doté de groupes latéraux réactifs et le composé V2 est un composé à bas poids moléculaire qui peut réagir avec les groupes latéraux réactifs du polymère selon le composé V1.

4. Procédé selon l'une quelconque des revendications 1 à 3, **caractérisé en ce que** le composé V1 est un polymère à base d'acide acrylique, d'acide méthacrylique, de copolymères styrène/acide acrylique, de copolymères styrène/acide méthacrylique, d'acide maléique ou un polymère à base de sels alcalins ou d'esters de l'acide acrylique ou de l'acide méthacrylique comme des (méth)acrylates et des copolymères styrène/(méth)acrylate ou un polymère à base de résines de formaldéhyde, de polyesters, de résines époxy ou de polyuréthanes, et/ou le composé V2 est un polyol, une polyamine, un polyépoxyde ou un poly(acide carboxylique).

5. Procédé selon l'une quelconque des revendications 1 à 4, **caractérisé en ce que**
i) la température de l'outil dans les étapes de procédé a) et b) indépendamment l'une de l'autre se situe entre 80 °C et 180 °C, de préférence entre 85 °C et 160 °C, et/ou
ii) la température de l'outil dans les étapes de procédé a) à c) se situe entre 80 °C et 180 °C, de préférence entre 85 °C et 160 °C, particulièrement préférablement entre 90 °C et 120 °C, et/ou
iii) au moins une étape supplémentaire de chauffage avant l'étape de procédé b), avant l'étape de procédé c) et/ou après l'étape de procédé c) est mise en œuvre, la température de l'outil étant comprise entre 80 °C et 180 °C, de préférence entre 85 °C et 160 °C, particulièrement préférablement entre 90 °C et 120 °C.

6. Procédé selon l'une quelconque des revendications 1 à 5, **caractérisé en ce que**
i) la proportion de l'au moins un matériau fibreux dans le composite est d'au moins 50 % en poids, préférablement d'au moins 60 % en poids, particulièrement préférablement d'au moins 70 % en poids par rapport au poids du composite, et/ou
ii) les proportions des composés V1 et V2 dans le composite sont ensemble d'au plus 70 % en poids, préférablement d'au plus 50 % en poids, particulièrement préférablement d'au plus 30 % en poids par rapport au poids du composite.

7. Procédé selon l'une quelconque des revendications 1 à 6, **caractérisé en ce que**
i) la température de l'outil dans les étapes de procédé a) et b), de préférence dans les étapes de procédé a) à d) est maintenue constante ou ne varie pas de plus de 5 °C, et/ou
ii) le composite présente une température, lors de l'introduction dans l'outil selon l'étape de procédé a), qui se situe dans la plage de 20 à 30 °C, et/ou
iii) les groupes latéraux réactifs du composé V1 sont des groupes acide ou des groupes époxy, et/ou
iv) le composite contient outre au moins un matériau fibreux, au moins un composé V1 et au moins un composé V2, encore d'autres ingrédients, de préférence un ou plusieurs catalyseurs, plus préférablement des catalyseurs contenant du phosphore, en particulier de l'hypophosphite de sodium, et/ou
v) le procédé du composite dans l'étape de procédé b) est mis en œuvre en tant que compression, et/ou
vi) l'étape de procédé c) est débutée seulement après la fin de l'étape de procédé b).

8. Procédé selon l'une quelconque des revendications 1 à 7, **caractérisé en ce que** l'outil est un outil combiné de pressage et de moulage par injection, de préférence un outil combiné de pressage et de moulage par injection pour des polymères pour moulage par injection, particulièrement préférablement un outil combiné de pressage et de moulage par injection pour thermoplastiques.

9. Procédé selon l'une quelconque des revendications 1 à 8, **caractérisé en ce que** le polymère de moulage par injection est chauffé à une température d'au moins 160 °C, de préférence à une température d'au moins 250 °C, particulièrement préférablement à une température d'au moins 300 °C, lorsqu'il est introduit dans l'outil dans l'étape de procédé c).

10. Procédé selon l'une quelconque des revendications 1 à 9, **caractérisé en ce que** le polymère de moulage par injection est un thermoplastique stable à haute température doté d'un point de fusion supérieur à 100 °C, de préférence le thermoplastique est choisi parmi un polyoxyméthylène (POM), un poly(téréphtalate de butylène) (PBT), un poly(téréphtalate d'éthylène) (PET), un polyamide 6, un polyamide 6.6, un polyamide 6.10, un polyamide 6.12, un polyamide 11 et un polyamide 12, particulièrement préférablement le thermoplastique est choisi parmi un polyamide 6, un polyamide 6.6, un polyamide 6.10, un polyamide 11 et un polyamide 12.

11. Procédé selon l'une quelconque des revendications 1 à 10, **caractérisé en ce que** le polymère de moulage par injection est renforcé à raison d'au plus 70 % en poids, de préférence à raison d'au plus 50 % en poids, particulièrement préférablement à raison d'au plus 30 % en poids par rapport au poids total du polymère de moulage par injection, avec un matériau choisi parmi des fibres de verre, des fibres de carbone, des fibres d'aramide, des fibres naturelles, des billes de verre et des mélanges correspondants.

12. Procédé selon l'une quelconque des revendications 1 à 11, **caractérisé en ce que** les étapes a) à d) sont définies comme suit :
e) introduction du composite dans l'outil, le composite contenant un polymère à base d'acide acrylique et/ou de copolymères styrène/acrylate, un polyol et un mélange de fibres naturelles et de fibres synthétiques, le composite présente une température dans la plage comprise entre 15 et 40 °C, et la température de l'outil se situe entre 80 °C et 180 °C,
f) déformation du composite en un corps moulé tridimensionnel dans l'outil, la température de l'outil se situant entre 110 °C et 150 °C,
g) fonctionnalisation du corps moulé tridimensionnel par surmoulage avec un polymère de moulage par injection, chauffé à une température d'au moins 160 °C, dans l'outil et
h) retrait du corps moulé fonctionnalisé, tridimensionnel de l'outil,
**caractérisé en ce que** le polymère à base d'acide acrylique et/ou de copolymères styrène/acrylate et le polyol sont réticulés l'un avec l'autre par réaction dans l'outil et durcissent de manière duroplastique et l'étape de procédé c) est débutée seulement après la fin de l'étape de procédé b), une étape supplémentaire de tempérage étant mise en œuvre après l'étape de procédé b) et avant l'étape de procédé c) ou pendant l'étape de procédé c), dans laquelle étape de tempérage le composite dans l'outil est soumis à une température comprise entre 80 °C et 180 °C.
